# EUROPEAN PATENT APPLICATION

(11) **EP 4 492 416 A2**
(43) Date of publication of application: **15.01.2025**
(21) Application number: 24216065.3
(22) Date of filing: 16.02.2023
(51) Int. Cl.: H01G 2/10

(54) **CAPACITOR, METHOD OF MANUFACTURING THEREOF AND USE THEREOF**

(30) Priority: 17.02.2022 DE 102022103760
(62) Divisional of application: 23707655.9
(71) Applicant: TDK Electronics AG, 81671 München (DE)
(72) Inventor: Li, Tim, Zhuhai 519125 (CN); Liang, William, Zhuhai City 519030 (CN); Qiu, Royal, Zhuhai City 519000 (CN); Wang, Hongzhi, Zhuhai City 519030 (CN); Olalla Martinez, David, 81539 München (DE); Drehmer, Eduardo, Iselin, NJ 08830 (US)
(74) Representative: Epping - Hermann - Fischer

(57) **Abstract**

An improved capacitor is provided. The capacitor is of the wound-type category and surface-mountable to provide high capacities in a compact form factor.

## Description

The present application refers to capacitors with improved properties, to methods of manufacturing and to specific use scenarios of the capacitor.

EMI reduction circuits (EMI = electromagnetic interference) use EMI Capacitors for such purpose with AC or DC electrical waveforms. An EMI capacitor is connected between an input and an output to reduce the EMI towards the systems at input or output. A DC-link capacitor electrically connects a switching device, e.g. of a vehicle, to its DC electric environment, e.g. a battery. The power converter can comprise inverters working with high power levels and in frequency ranges where unwanted frequencies should be avoided.

Capacitors can be divided into two categories according to their construction. Capacitors can comprise a layer stack of conducting and dielectric layers stacked above one another. Another category of capacitors comprises a dielectric material between two electrodes where the material of the electrodes and the dielectric material are wound.

For a capacitor it is generally preferred that the capacitor has a high capacitance, small spatial dimensions, complies with high voltage applications and high power applications and provides good performance and a good reliability.

Further, capacitors can be divided into categories according to their integration into external circuit environments. Capacitors can comprise terminals provided for THT (through hole technology) where the capacitor's terminals are arranged in holes and soldered to the external circuit environment. Another category of connection is obtained via SMT (surface mount technology) where terminals of an electric component are arranged onto a carrier and electrically and mechanically connected to contacts of the external circuit environment on the carrier surface. Thus, there is the desire to have compact capacitors providing the above-described advantages that can be surface-mountable into an external circuit environment. Specifically, it is preferred to have a compact SMT-compatible capacitor with a large capacitance.

To that end, a capacitor according to independent claim 1 is provided. Dependent claims provide preferred embodiments, methods and uses.

The capacitor comprises a first electrode, a second electrode and a dielectric material. The dielectric material is arranged between the first electrode and the second electrode. Further, the capacitor comprises a first terminal and a second terminal. The first terminal is electrically connected to the first electrode and the second terminal is electrically connected to the second electrode. The first electrode material, the second electrode material and the dielectric material establish a wound-type capacitance element. The first terminal and the second terminal are surface-mountable terminals.

Thus, such a capacitor belongs to the category of wound-type capacitors and to the category of SMT-compatible capacitors.

It is possible that the capacitor complies with reflow requirements. Specifically, it is possible that the capacitor is insensitive enough to the required temperatures and durations of a reflow process.

In a reflow process SMT components are placed with their corresponding terminals onto connection pads of a carrier to be electrically and mechanically connected. To that end, the whole component is heated, e.g. in a reflow oven, to a temperature and for a duration such that reliable electrical and mechanical contacts between the terminals and the connection pads of the carrier are established. In contrast to THT connections where, for soldering, high temperatures are only necessary at the location of the terminals, the corresponding high temperature is applied to the electrical component as a whole. Therefore, all elements and materials must be compliant with the reflow requirements.

It was found that a capacitor as described above can comply with the reflow requirements. This allows the provision of capacitors, specifically with large capacities, that are wound-type capacitors and that can be processed with SMT processes.

It is possible that the capacitor has a capacitance of 1 µF or more. Specifically, it is possible that the capacitor has a capacitance of between 1.1 µF and 2.2 µF in a compact housing that can be processed with SMT processes.

Further, it is possible that the first terminal and the second terminal comprise a material selected from steel, copper, brass or aluminum. Further, the terminals can comprise a coating layer of pure Tin or tin alloy to support the soldering process.

The first terminal and the second terminal can comprise or consist of the same material. Specifically, materials providing a high electrical conductivity and a low thermal conductivity are preferred.

It is possible that the dielectric material is selected from, PET (Polyethylene terephthalate), PEN (polyethylene naphthalate), PPS (polypropylene sulphide), PTFE (polytetrafluoroethylene), PS (Polystyrene), PC (polycarbonate) and PET HT (HT = high Temperature).

It was found that such dielectric materials can comply with SMT processes and provide a reliable capacitor. The use of such materials is possible because during manufacturing an annealing process can be performed to prepare the dielectric materials for the later SMT process steps. Further, a possible shrinking of the thickness of the dielectric material can be compensated by providing a dielectric material that has a thickness that complies - after SMT processing - with the requirements concerning high voltage applications, high power applications and high capacitance.

Further, the heat resistance of the capacitor can be further increased by providing a heat shield in the capacitor. The heat shield can be arranged below the capacitance element of the capacitor. In this context "below the capacitance element" means that the heat shield is arranged between the capacitance element and the location of the connection side of the terminals that are to be electrically connected to an external circuit element.

The heat shield can comprise a material that has a low thermal conductivity. The heat shield can be used to protect the sensitive capacitance element of the capacitor, specifically the heat sensitive dielectric material of the capacitance element from heat entering the capacitor, specifically via a path along the terminals when the terminals establish a heat bridge from the outside to the capacitance element. Thus, the heat shield can comprise small openings via which conductor elements of the terminals are conducted to electrically connect the capacitance element to the external circuit environment. However, further heat radiated by the lower portions of the terminals is blocked by the heat shield.

The heat shield can comprise heat resistant materials such as ceramics or less sensitive plastic materials.

Further, it is possible that the capacitor comprises a heat sink arranged below the capacitance element, e.g. arranged between the capacitance element and the connection side of the terminals. The heat sink can be used to concentrate heat that has entered into the capacitor such that the heat sink establishes a sacrificial element for heat protecting the more sensitive capacitance element.

It is possible that the heat sink comprises a material of a certain degree of thermal conductivity. Specifically, it is possible that the heat sink comprises a material of a large thermal capacity.

Further, it is possible that the heat sink comprises a phase change material having a phase change temperature below a degradation temperature of the dielectric material.

The phase change can be a reversible phase change, or an irreversible phase change when the component shall be used only once in an SMT process.

It is possible that the first and second terminals have a length in the vertical direction of larger than or equal to 1 mm.

A larger length is preferred because then the heat conductance of the terminals is reduced and the heat protection of the capacitance element in the capacitor is improved.

It is possible that the capacitor comprises a housing in which the wound capacitance element is arranged.

The housing may comprise an inner wall and an outer wall, wherein the inner wall and the outer wall are separated by a gap. Accordingly, the housing may be a case with a double wall. In particular, each of the walls of the housing may be double walls, i.e. formed by an inner wall and an outer wall which are separated by a gap.

Due to the housing comprising an inner wall and an outer wall which are separated by a gap, the housing provides a high thermal insulation of the capacitance element arranged in the housing. The gap between the inner wall and the outer wall may act as a heat absorption element absorbing heat entering the housing from the outside and protecting the capacitance element at least temporarily for the duration of a reflow process from reaching critical temperatures.

Preferably, the gap is filled with air or with another thermally insulating material.

The housing can comprise a plastic material that is less sensitive to heat. It is preferred that the housing material has a low thermal conductivity.

Further, it is possible that the capacitor further comprises a filler in the housing. The filler in the housing can be arranged such that the capacitance element is arranged in the filler.

It is preferred that the thermal coefficients of expansion of the housing, the filler and the materials of the capacitance elements are sufficiently similar such that thermal stress during temperature changes is reduced.

It is possible that the filler comprises or consists of an epoxy resin.

The filler can be used to remove potential spaces where air and/or humidity can be stored in the capacitor. Thus, it is possible that the capacitor is essentially free from air and/or humidity.

Containing no, or essentially no, air or humidity improves the behaviour of the capacitor in response to heat, specifically during the SMT processes such as reflow heating and the like.

It is possible that the capacitor is usable with a pick-and-place machine.

Such a pick-and-place machine can be used in an SMT process to locate the capacitor at the right position and the right orientation on a carrier of an external circuit environment.

Further, it is possible that a DC-link component comprises one or several such capacitors. The DC-link component can be used to electrically and mechanically connect a switching device to a DC electrical supply, e.g. battery or rectified supply, from main supply. It is possible that an EMI component comprises one or several such capacitors and connect AC input or output from or to main supply with the power converter.

In the DC-link component, the capacitor can be used as part of an electromagnetic interference reduction circuit. Specifically, the capacitor can be used as a capacitance element in a resonant or in an anti-resonant circuit or in a filter.

The capacitor can be provided and adapted to work with a working voltage in a range equal or above 600 V for DC or equal or above 100 VAC for AC. The housing of the capacitor can have a cuboid shape with a length, a width and a height. The length can be between 18 mm and 100 mm, e.g. 31.5 mm. The height of the housing can be between 10 and 100 mm, e.g. 40 mm. The vertical height of the terminals can be between 1 mm and 5 mm, e.g. 2 mm. The width of the housing can be between 20 mm and 100 mm, e.g. 28.5 mm. The length of a terminal in a horizontal direction (x,y) can be between 10 mm and 30 mm, e.g. 20 mm. The corresponding width of the connection surface of a terminal in the corresponding orthogonal horizontal direction can be between 5 mm and 8 mm, e.g. 6.5 mm.

A method of manufacturing a capacitor as described above can comprise the steps of:
- providing a material for the first electrode, for the second electrode and for the dielectric;
- providing a first surface mountable terminal and a second surface mountable terminal;
- providing a housing;
- winding the material for the first electrode, the material for the second electrode and the dielectric to obtain a wound-type capacitance element;
- connecting the electrode of the capacitance elements to the surface mountable terminals;
- arranging the capacitance element in a housing.

Further, the method can comprise annealing the capacitor.

The annealing can lead to an increased heat resistance necessary to comply with SMT process requirements.

Specifically, the annealing can be used to prepare the dielectric material, e.g. to shrink the thickness of the dielectric material.

Further, the annealing can be used to augment removal of air and/or humidity within the capacitor's housing.

Further, the method can comprise filling the corresponding remaining volume in the housing - to expel air and humidity - with a filler to remove air and/or humidity.

Such a capacitor can be used in an EMI reduction circuit, e.g. in a resonant circuit or an inter-resonant circuit or a filter.

Specifically, the capacitor can be used in DC-link circuit.

It is possible to use the capacitor for voltages up to 630 V or above and 100 Vac or above, specifically 100Vac.

In the following, advantageous aspects are described. In order to facilitate referencing, the aspects are numbered consecutively. Features of the aspects are not only relevant in combination with the specific aspect to which they relate, but also when considered separately.
1. Capacitor, comprising
   - a first electrode, a second electrode and a dielectric material arranged between the first electrode and the second electrode,
   - a first terminal electrically connected to the first electrode,
   - a second terminal electrically connected to the second electrode,
   wherein
   - the first electrode material, the second electrode material and the dielectric material establish a wound-type capacitance element and
   - the first terminal and the second terminal are surface mountable terminals.
2. Capacitor of the previous aspect, having a capacity larger than 1.0 µF.
3. Capacitor of one of the previous aspects, wherein the first terminal and the second terminal comprise a material selected from steel, copper, brass, aluminum, a coating with Tin or a tin alloy.
4. Capacitor of one of the previous aspects, wherein the dielectric material is selected from PET (Polyethylene terephthalate), PEN (polyethylene naphthalate), PPS (polypropylene sulphide), PTFE (polytetrafluoroethylene), PS (Polystyrene), PC (polycarbonate) and PET HT.
5. Capacitor of one of the previous aspects, further comprising a heat shield arranged below the capacitance element.
6. Capacitor of one of the previous aspects, further comprising a heat sink arranged below the capacitance element.
7. Capacitor of one of the aspects 1 to 5, further comprising a heat sink arranged between the capacitance element and the connection side of the terminals.
8. Capacitor of one of the previous aspects, wherein the first and second terminal have a length > 1 mm in the vertical direction.
9. Capacitor of one of the previous aspects, comprising a housing in which the wound capacitance element is arranged.
10. Capacitor of aspect 9,
   wherein the housing comprises an inner wall and an outer wall, wherein the inner wall and the outer wall are separated by a gap.
11. Capacitor of aspect 10,
   wherein the gap is filled with air or with another thermally insulating material.
12. Capacitor of one of aspects 9 to 11, further comprising a filler in the housing such that the capacitance element is arranged in the filler.
13. Capacitor of the previous aspect, wherein the filler comprises an epoxy resin.
14. Capacitor of one of the previous aspects, wherein the capacitor is essentially free from air and/or humidity.
15. Capacitor of one of the previous aspects, being usable with a pick-and-place machine.
16. Method of manufacturing a capacitor of one of the previous aspects, comprising the steps of:
   - providing a material for the first electrode, for the second electrode and for the dielectric;
   - providing a first surface mountable terminal and a second surface mountable terminal;
   - providing a housing;
   - winding the material for the first electrode, the material for the second electrode and the dielectric to obtain a wound-type capacitance element;
   - connecting the electrodes of the capacitance element to the surface mountable terminals;
   - arranging the capacitance element in a housing.
17. Method according to the previous aspect, further comprising annealing the capacitor.
18. Method according to the two previous aspects, further comprising filling a remaining volume in the housing with a filler to remove air and/or humidity.
19. Use of a capacitor of one of aspects 1 to 16 in an EMI reduction circuit.
20. Use according to the previous aspect in a DC-Link circuit.
21. Use according to one of the two previous aspects for voltages ≥ 630V.
22. Use according to one of the three previous aspects in an EMI filter circuit.
23. Use according to one of the three previous aspects for AC voltages ≥ 100Vac.

Central aspects and details of preferred embodiments are shown in the accompanying schematic figures.

In the figures:
Figures 1 to 4 illustrate basic features enhancing the temperature resistance.
Figures 5 to 7 show cross-sections of a capacitor viewed from different directions.
Figure 8 shows a perspective view of a capacitor.
Figure 9 shows a perspective view of the housing H of the capacitor.

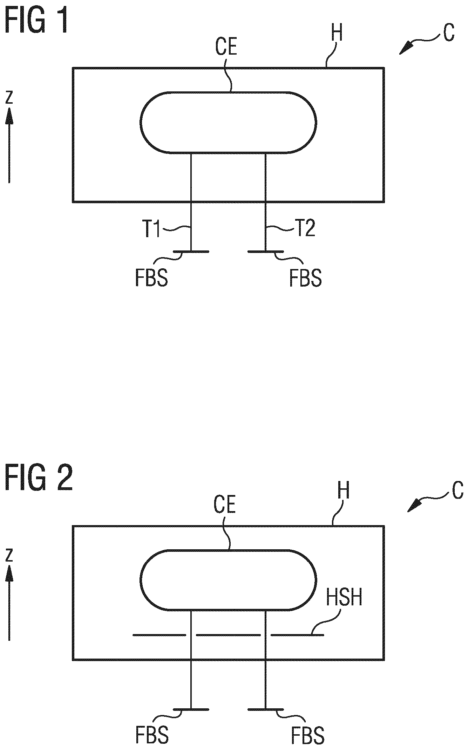

Figure 1 illustrates details of a capacitor C. The capacitor C comprises a housing H and a capacitance element CE.

Further, the capacitor C comprises a first terminal T1 and a second terminal T2. The capacitance element CE comprises wound sheet material of the electrodes electrically connected to the two terminals T1 and T2 and a dielectric material arranged between the two electrodes. Further, the two terminals T1, T2 have a flat bottom side FBS. Via the flat bottom side the capacitor C is surface-mountable and thus usable with a pick-and-place machine and connectable - electrically and mechanically - to corresponding solder pads of a carrier of an external circuit environment, e.g. a DC-link component.

Increasing the vertical height of the two terminals T1, T2, i.e. increasing the length of the terminals in the vertical direction z increases the thermal barrier between the terminals' connection sides FBS and the sensitive capacitance element CE.

Further, Figure 2 illustrates the possibility of providing heat shield HSH arranged - in a vertical direction z - below the capacitance element CE. Thus, the heat shield HSH is arranged between the capacitance element CE and the flat bottom sides of the terminals.

An additional heat shield can be placed surrounding the housing H and having an air gap of at least 1 mm, e.g. between 2 mm and 5 mm.

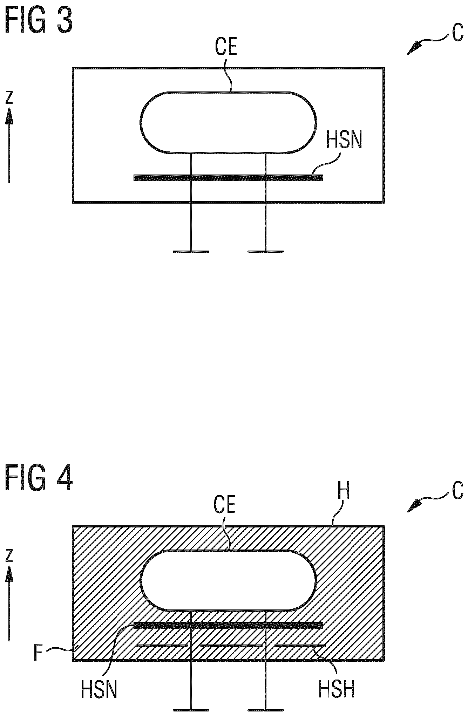

Further, Figure 3 shows the possibility of arranging a heat sink HSN in a vertical direction z below the capacitance element CE. The heat sink HSN can be thermally coupled to the terminals. The terminals - due to their electrically conducting nature - can establish an unwanted heat conduction path from the outside of the housing to the capacitance element CE although a low thermal conductivity of the terminals is wanted. Then, the heat sink HSN can act as a heat absorption element absorbing heat entering the housing from the outside and protecting the capacitance element CE at least temporarily for the duration of the reflow process from reaching critical temperatures.

Further, Figure 4 illustrates the combined application of the heat shield HSH and the heat sink HSN.

Further, Figure 4 illustrates the possibility of filling a remaining volume of the housing H with a filler F in order to avoid or reduce the amount of air or humidity in the housing H. It is of course preferred that the capacitor C has compact dimensions. Thus, it is preferred that a volume not contributing to the capacitance of the capacitor C is as small as possible. Correspondingly, for the volume of the capacitance element CE and the volume of the space filled with the filler a corresponding optimized ratio should be obtained. However, the provision of the filler F can further thermally decouple the capacitance element CE from the outside of the capacitor C, enhancing the heat resistance - at least temporarily - of the capacitor C.

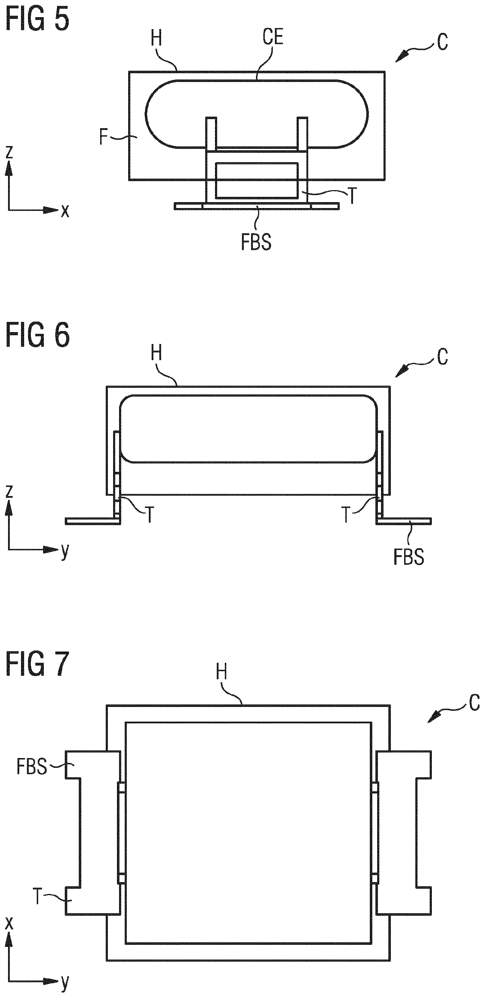

Figure 5 illustrates a cross-section in a view parallel to the horizontal y direction of a capacitor C. The terminals T comprise two legs that are electrically and mechanically connected at a location within the housing H and that are electrically and mechanically connected at the bottom side, specifically at the flat bottom side FBS, making the capacitor C compliant with SMT processes.

Figure 6 shows a cross-section parallel to a horizontal direction x. In this view the terminals T1, T2, are L-shaped.

Further, Figure 5 and Figure 6 clearly show that the position of the capacitance element CE within the housing H is off-center. Specifically, the center of the capacitance element CE is arranged at a higher position compared to the center of the housing H of the capacitor C. Thus, the length of the terminals T is increased and thermal resistance to the flat bottom sides is also increased.

Figure 6 shows a bottom view of the capacitor C. This means that the perspective is on the flat bottom sides FBS. The flat bottom sides FBS can be considered as comprising a rectangular shape and two added smaller rectangles attached at the distal ends of the main rectangular patch of the terminals T.

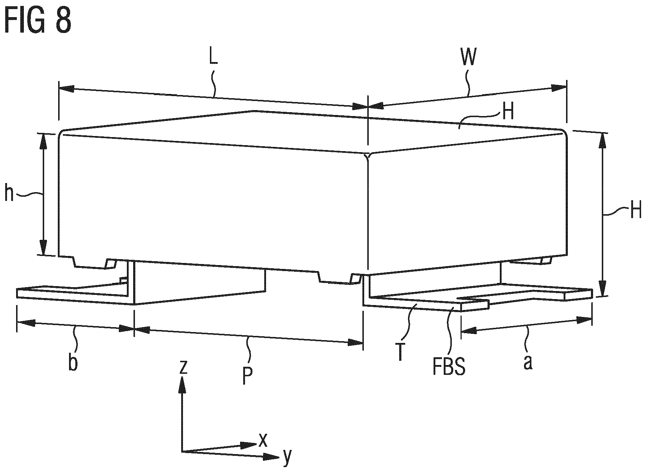

Figure 8 shows a perspective view of a capacitor C. The width W in the horizontal direction x can be 28.5 mm. The length in the horizontal direction y can be 31.5 mm. The vertical height of the housing H can be 13 mm. The overall height of the capacitor C including the vertical dimensions of the terminals H can be 15 mm. The horizontal extension in the y direction can be b = 6.5 mm. The horizontal extension in the x direction of the terminals, specifically at the flat bottom sides of the terminals, can be a = 20 mm. The distance between the two terminals P can be 27.5 mm.

With the dimensions of the capacitor C shown in Figure 8, the capacitance can be up to 1.1 µF with a working voltage of 630 Vdc or 305 Vac with dimensions width = 28.5 mm; height = 15 mm and length = 31.5 mm.

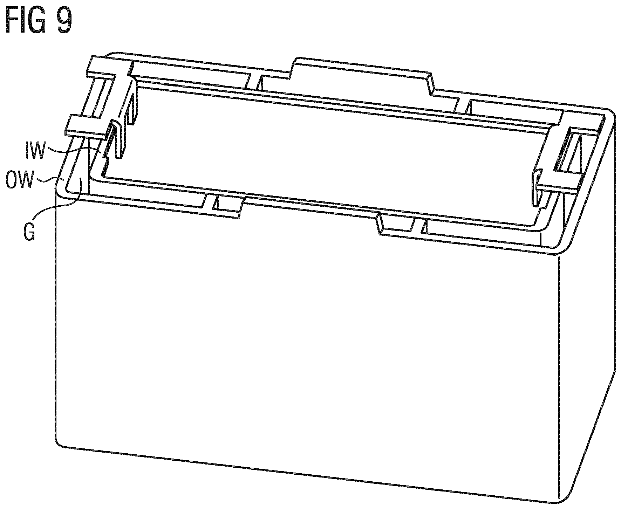

Figure 9 shows a perspective view of the housing H of the capacitor. The housing H is a double wall case. The housing H comprises an inner wall IW and an outer wall OW. The inner wall IW faces towards a cavity which is enclosed by the housing H and in which the capacitor element CE is arranged. The outer wall OW faces away from the cavity which is enclosed by the housing H. The inner wall IW and the outer wall OW do not abut each other. Instead, the inner wall IW and the outer wall OW are separated by a gap G. The gap G may be filled with air or with another thermally insulating material.

As the housing H is a double wall case, it provides a very high thermal insulation of the capacitor element CE from the environment of the housing H.

The capacitor and the methods and uses are not limited to the properties described above. The capacitor can comprise further elements such as temperature sensors, heat shields, mechanical or electrical protection elements, e.g. for protecting the capacitor against over-voltages. The terminals, specifically the flat bottom sides of the terminals, can comprise additional materials, e.g. solder, for enhancing the solder process. Uses other than EMI reduction or in a DC-link component are also possible. Specifically, it is possible to use the capacitor as a short-term energy storage.

Further, the capacitor can be used with corresponding capacitors to establish a capacitor array for increased capacitance or for increased voltage resistance. Then, the capacitors can be arranged in a series connection or in a parallel connection or both.

### List of Reference Signs

- C:: capacitor
- H:: housing
- CE:: capacitance element
- T1,T2,T:: terminal
- FBS:: flat bottom side of a terminal
- HSH:: heat shield
- HSN:: heat sink
- x,y:: horizontal directions
- z:: vertical direction
- F:: filler
- IW:: inner wall
- OW:: outer wall
- G:: gap

## Claims

1. Capacitor, comprising
- a first electrode, a second electrode and a dielectric material arranged between the first electrode and the second electrode,
- a first terminal electrically connected to the first electrode,
- a second terminal electrically connected to the second electrode,
wherein
- the first electrode material, the second electrode material and the dielectric material establish a wound-type capacitance element and
- the first terminal and the second terminal are surface mountable terminals,
- the capacitor further comprises a heat sink arranged below the capacitance element and/or a heat sink arranged between the capacitance element and a connection side of the terminals.

2. Capacitor of the previous claim, having a capacity larger than 1.0 µF.

3. Capacitor of one of the previous claims, wherein the first terminal and the second terminal comprise a material selected from steel, copper, brass, aluminum, a coating with Tin or a tin alloy.

4. Capacitor of one of the previous claims, wherein the dielectric material is selected from PET (Polyethylene terephthalate), PEN (polyethylene naphthalate), PPS (polypropylene sulphide), PTFE (polytetrafluoroethylene), PS (Polystyrene), PC (polycarbonate) and PET HT.

5. Capacitor of one of the previous claims, further comprising a heat shield arranged below the capacitance element.

6. Capacitor of one of the previous claims, wherein the first and second terminal have a length > 1 mm in the vertical direction.

7. Capacitor of one of the previous claims, comprising a housing in which the wound capacitance element is arranged.

8. Capacitor of claim 7,
wherein the housing comprises an inner wall and an outer wall, wherein the inner wall and the outer wall are separated by a gap.

9. Capacitor of claim 8,
wherein the gap is filled with air or with another thermally insulating material.

10. Capacitor of one of claims 7 to 9, further comprising a filler in the housing such that the capacitance element is arranged in the filler.

11. Capacitor of the previous claim, wherein the filler comprises an epoxy resin.

12. Capacitor of one of the previous claims, wherein the capacitor is essentially free from air and/or humidity.

13. Capacitor of one of the previous claims, being usable with a pick-and-place machine.

14. Method of manufacturing a capacitor of one of the previous claims, comprising the steps of:
- providing a material for the first electrode, for the second electrode and for the dielectric;
- providing a first surface mountable terminal and a second surface mountable terminal;
- providing a housing;
- winding the material for the first electrode, the material for the second electrode and the dielectric to obtain a wound-type capacitance element;
- connecting the electrodes of the capacitance element to the surface mountable terminals;
- arranging the capacitance element in a housing.

15. Method according to the previous claim, further comprising annealing the capacitor.

16. Method according to the two previous claims, further comprising filling a remaining volume in the housing with a filler to remove air and/or humidity.

17. Use of a capacitor of one of claims 1 to 13 in an EMI reduction circuit.

18. Use according to the previous claim in a DC-Link circuit.

19. Use according to one of the two previous claims for voltages ≥ 630V.

20. Use according to one of the three previous claims in an EMI filter circuit.

21. Use according to one of the three previous claims for AC voltages ≥ 100Vac.
